# EUROPÄISCHE PATENTSCHRIFT

(11) **EP 2 511 053 B1**
(45) Veröffentlichungstag und Bekanntmachung des Hinweises auf die Patenterteilung: **05.08.2020**
(21) Anmeldenummer: 12002590.3
(22) Anmeldetag: 12.04.2012
(51) Int. Cl.: B25J 9/16, G05B 19/4063, G05B 19/4062

(54) **Schaltungsanordnung und Verfahren zum Überwachen einer gefahrbringenden Einrichtung durch Auswertung der Beschleunigung**
Circuit and method for monitoring a hazardous device by evaluating acceleration
Circuit et procédé de surveillance d'un dispositif vecteur de danger par évaluation de l'accélération

(30) Priorität: 14.04.2011 DE 102011017050; 31.08.2011 DE 102011111532
(43) Veröffentlichungstag der Anmeldung: 17.10.2012
(73) Patentinhaber: Phoenix Contact GmbH & Co. KG, 32825 Blomberg (DE)
(72) Erfinder: Rohs, Markus, 32825 Blomberg (DE); Teutenberg, Jürgen, 59602 Rüthen (DE); Kenfouet, Celarie Marceraus Donbou, 31812 Bad Pyrmont (DE)
(74) Vertreter: Kampfenkel, Klaus

(56) Entgegenhaltungen:
- DE-A1- 3 634 023
- DE-A1-102004 026 185
- DE-A1-102008 062 978
- US-A1- 2003 050 735

## Beschreibung

Die Erfindung betrifft allgemein die Sicherheitstechnik und insbesondere eine Schaltungsanordnung und ein Verfahren zum Überwachen einer gefahrbringenden Einrichtung durch Auswertung der Beschleunigung.

Die Erfassung von Bewegungen wird heute in der Sicherheitstechnik typischerweise über Drehgeber, Resolver oder Initiatoren gelöst. Beschleunigungssensoren finden heute häufig in Mobiltelefonen, Spielkonsolen und in der Kfz-Navigation Anwendung.

Aus DE 10 2008 062 978 A1 ist eine Handhabungsmaschine und ein Verfahren zu deren Betrieb bekannt, wobei zur selbsttätigen Erkennung einer Ausnahmesituation wie zum Beispiel dem Überschreiten eines vorgegebenen Beschleunigungswertes ein Sensor vorgesehen ist, über den eine Einrichtung aktiviert wird, welche beispielsweise die Funktion eines Sicherheitsrelais zum Stoppen einer Roboterarmbewegung realisiert.

In DE 10 2004 026185 A1 wird ein Verfahren und eine Vorrichtung zum Betreiben einer Maschine, wie beispielsweise eines Mehrachs- Industrieroboters, beschrieben, wobei das Verfahren vorsieht, dass zumindest ein Bahnabschnitt überwacht in einer Referenzfahrt durchfahren wird, bewegungscharakteristische Betriebswerte kontinuierlich gemessen und als Referenzwerte gespeichert werden, und dass im Betrieb der Maschine ebenfalls diese Betriebswerte erfasst und mit den gespeicherten Referenzwerten verglichen werden, wobei zur Bestimmung der Referenz- und Betriebsmesswerte Beschleunigungssensoren eingesetzt werden können, wobei auch redundante Sensoren sowie unterschiedliche Arten von Sensoren zum Einsatz kommen können.

Aus DE 36 34 023 A1 ist ein integriertes, redundantes Referenzsystem für die Flugregelung und zur Erzeugung von Kurs- und Lageinformationen bekannt, bei welchem eine Mehrzahl von Beschleunigungssensoren redundante Beschleunigungsinformationen liefert, wobei Mittel zur Fehlererkennung und -ausschaltung vorgesehen sind, so dass fehlerhafte Beschleunigungsinformationen eliminiert werden können.

Aus US 2003/0050735 A1 ist eine Sicherheitsschaltung bekannt, welche eine Vielzahl von Sensoren auf ein Eindringen von Objekten oder Personen in den Arbeitsraum eines Roboters überwacht.

Der Erfindung liegt die Aufgabe zugrunde, einen Weg aufzuzeigen, wie die Überwachung einer gefahrbringenden Einrichtung einfacher, sicherer und/oder kostengünstiger erfolgen kann. Insbesondere ist es Aufgabe der Erfindung, eine Schaltungsanordnung und ein Verfahren anzugeben, mit der eine solche Überwachung durchgeführt werden kann.

Diese Aufgabe wird durch eine Schaltungsanordnung gemäß Anspruch 1 und ein Verfahren gemäß Anspruch 11 gelöst. Vorteilhafte Ausführungsformen und Weiterbildungen sind in den jeweiligen Unteransprüchen angegeben.

Eine erfindungsgemäße Schaltungsanordnung zur Überwachung einer gefahrbringenden Einrichtung umfasst dementsprechend wenigstens zwei Beschleunigungssensoren zum Messen einer Beschleunigung wenigstens eines Teils der gefahrbringenden Einrichtung, wenigstens eine logische Schaltung zur Auswertung von Messwerten der wenigstens zwei Beschleunigungssensoren, wenigstens einen Speicher zum Speichern eines Vergleichswertes, und wenigstens eine durch einen Ausgang der wenigstens einen logischen Schaltung gesteuerte Sicherheitseinrichtung.

Die Sicherheitseinrichtung ist dazu ausgebildet, in Antwort auf ein über den Ausgang der wenigstens einen logischen Schaltung empfangenen Schaltbefehl die gefahrbringende Einrichtung in einen sicheren Zustand zu überführen, wobei die wenigstens eine logische Schaltung den Schaltbefehl an die wenigstens eine Sicherheitseinrichtung sendet, wenn die gemessene Beschleunigung des wenigstens einen Teils der gefahrbringenden Einrichtung oder eine aus der gemessenen Beschleunigung abgeleitete Größe ein vorgegebenes Verhältnis zu dem gespeicherten Vergleichswert aufweist. Vorzugsweise erfolgt eine Prüfung, ob die gemessene Beschleunigung oder eine daraus abgeleitete Größe wie beispielsweise eine Geschwindigkeit oder eine Position den vorgegebenen Vergleichswert über- oder unterschreitet. Es können auch mehrere Vergleichswerte, wie beispielsweise ein oberer und ein unterer Grenzwert zur Festlegung eines Sollbereiches für Beschleunigung, Geschwindigkeit oder Position gespeichert werden, wobei ein Schaltbefehl bei Unterschreiten des unteren Grenzwertes oder bei Überschreiten des oberen Grenzwertes durch die jeweilige Größe erzeugt wird.

Eine gefahrbringende Einrichtung im Sinne der vorliegenden Erfindung ist jede technische Einrichtung, von der eine nicht zu vernachlässigende Gefahr für Menschen und/oder materielle Güter ausgeht. Beispielsweise kann die gefahrbringende Einrichtung eine Maschine oder Anlage eines Automatisierungssystems sein. Der Teil der gefahrbringenden Einrichtung, dessen Beschleunigung überwacht wird, kann beispielsweise ein an einem Roboterarm befestigtes Werkzeug sein.

Prinzipiell kann jede geeignete Art von Beschleunigungssensor eingesetzt werden, beispielsweise ein piezoelektrischer Sensor oder ein als mikro-elektromechanisches System (MEMS) ausgebildeter Sensor.

Je nach Einsatzzweck können die Beschleunigungssensoren beispielsweise dazu ausgebildet sein, lineare Beschleunigungen in ein, zwei oder drei Raumrichtungen zu messen, wobei die Beschleunigungssensoren erfindungsgemäß zum Messen von Beschleunigungen in drei Raumrichtungen ausgebildet sind. Vorteilhaft wird von dem jeweiligen Beschleunigungssensor für jede gemessene Raumrichtung ein der jeweiligen Beschleunigung proportionales Ausgangssignal erzeugt, wobei die Ausgangssignale je nach Ausgestaltung analog oder digital bereitgestellt werden können. Für bestimmte Einsatzzwecke kann es ferner vorteilhaft sein, dass der wenigstens eine Beschleunigungssensor dazu ausgebildet ist, eine Winkelbeschleunigung zu messen, wobei auch dies für ein, zwei oder drei Raumachsen erfolgen kann.

Durch die zweikanalige Ausgestaltung mit zwei Beschleunigungssensoren wird vorteilhaft ein erhöhtes Maß an Sicherheit erreicht. Besonders bevorzugt ist jedem der Beschleunigungssensoren jeweils eine separate logische Schaltung zugeordnet, wobei insbesondere durch jede der separaten logischen Schaltungen eine separate Sicherheitseinrichtung gesteuert wird. Auf diese Weise werden zwei unabhängige Kanäle gebildet, welche redundant die gefahrbringende Einrichtung in einen sicheren Zustand überführen können.

Die wenigstens eine logische Schaltung kann vorteilhaft dazu ausgebildet sein, aus den Messwerten der Beschleunigungssensoren die Geschwindigkeit und/oder die Position des wenigstens einen Teils der gefahrbringenden Einrichtung zu ermitteln. Dies kann beispielsweise durch Integration der gemessenen Beschleunigungswerte erfolgen. Die mathematische Integration der Beschleunigungswerte über die Zeit kann jedoch durch Addition von Messfehlern auf Dauer zu einer falschen Annahme der realen Geschwindigkeit oder Position führen. Deshalb verfügt die logische Schaltung, im Folgenden auch als Logikeinheit bezeichnet, vorteilhaft über Eingänge, um eine bestimmte Position, wie beispielsweise eine Start- oder Zwischenposition einer vorgegebenen Bewegung, oder eine Bedingung wie beispielsweise Start, Stop oder Reset an die Logikeinheit zu melden, um die Addition der Messfehler zurückzusetzen.

Ferner kann ein Eingang vorgesehen sein, über den der Logikeinheit ein Grenzwert zugeführt wird, welcher in dem Speicher gespeichert wird. Vorzugsweise weist zu diesem Zweck jede der Logikeinheiten einen entsprechenden Speicher auf.

Vorteilhaft sind die Logikeinheiten der redundanten Kanäle miteinander verbunden, um untereinander Daten auszutauschen. Zur Vereinfachung der Schaltungsanordnung kann daher vorteilhaft nur bei einer Logikeinheit ein Eingang zum Zuführen bestimmter Daten vorgesehen sein, wobei diese die empfangenen Daten an die weiteren Logikeinheiten weiterreicht. Dementsprechend weist vorzugsweise nur wenigstens eine der logischen Schaltung einen Eingang auf, um der logischen Schaltung einen Grenzwert und/oder Initialisierungsdaten zum Initialisieren der ermittelten Geschwindigkeit und/oder Position des wenigstens einen Teils der gefahrbringenden Einrichtung zuzuführen. Die Logikeinheiten können ferner auch die gemessenen Beschleunigungswerte untereinander austauschen.

Die Schaltungsanordnung ist ferner dazu ausgebildet, die Messwerte der wenigstens zwei Beschleunigungssensoren auf Plausibilität zu prüfen. Zu diesem Zweck erfolgt vorteilhaft ein Vergleich der durch unterschiedliche Beschleunigungssensoren ermittelten Messwerte oder jeweils daraus ermittelter Messgrößen wie der Geschwindigkeit oder der Beschleunigung. Insbesondere können zu diesem Zweck die entsprechenden Messwerte oder Messgrößen zwischen wenigstens zwei logischen Schaltungen, die jeweils unterschiedlichen Beschleunigungssensoren zugeordnet sind, ausgetauscht werden. Im Normalfall liefern die unterschiedlichen Sensoren im Wesentlichen gleiche Messwerte bzw. abgeleitete Messgrößen, die im Wesentlichen den gleichen Wert aufweisen. Ergibt die Plausibilitätsprüfung voneinander abweichende Werte für unterschiedliche Sensoren, so deutet dies auf eine Fehlfunktion wenigstens eines Sensors hin. Die Plausibilitätsprüfung dient somit der Überprüfung der Sensoren, wobei vorteilhaft in Abhängigkeit des Ergebnisses der Plausibilitätsprüfung ein entsprechendes Signal an einem Ausgang der Schaltungsanordnung bereitgestellt wird. Die Plausibilitätsprüfung wird vorzugsweise durch wenigstens eine der logischen Schaltungen ausgeführt.

Zur Vermeidung von Ausfällen aufgrund gemeinsamer Ursache (common cause failures), bedingt beispielsweise durch einen gemeinsamen Konstruktionsfehler der Beschleunigungssensoren, welche zu einer unerwünschten Aufhebung der Redundanz führen könnten, sind die zwei Beschleunigungssensoren um einen vorgegeben Winkel versetzt zueinander angeordnet, wobei die jeweils zugeordnete Logikeinheit an die Auswertung der jeweils unterschiedlichen Signale der versetzt angeordneten Beschleunigungssensoren angepasst ist. Auf einfache Weise kann eine solche Anpassung erfolgen, wenn Beschleunigungssensoren eingesetzt werden, welche zum Messen von Beschleunigungen in drei Raumrichtungen ausgebildet sind, und die Beschleunigungssensoren durch eine Drehung um die z-Achse um 90° versetzt angeordnet sind, da in diesem Fall bei der Auswertung lediglich die x- und y-Achsen vertauscht werden müssten. Es kann aber vorteilhaft auch jeder andere Winkel, beispielsweise 45°, verwendet werden.

In einer bevorzugten Ausführungsform wird der Winkelversatz der Beschleunigungssensoren dadurch erreicht, dass jeder der Beschleunigungssensoren jeweils auf gleiche Weise auf einer separaten Leiterplatte angeordnet ist, wobei die Leiterplatten um einen vorgegebenen Winkel versetzt zueinander angeordnet sind.

Zum Überführen der gefahrbringenden Einrichtung in einen sicheren Zustand kann diese vorzugsweise abgeschaltet werden. Dementsprechend ist die wenigstens eine Sicherheitseinrichtung vorteilhaft zur Unterbrechung der Stromversorgung der gefahrbringenden Einrichtung ausgebildet. Bevorzugt umfasst die wenigstens eine Sicherheitseinrichtung zu diesem Zweck ein Relais oder einen beispielsweise als Transistor ausgebildeten Halbleiterschalter. Alternativ kann die Sicherheitseinrichtung beispielsweise zur Aktivierung einer Bremseinrichtung ausgebildet sein, welche dazu geeignet ist, die gefahrbringende Einrichtung durch einen Bremsvorgang in einen sicheren Zustand zu überführen. Je nach Ausgestaltung der gefahrbringenden Einrichtung sind weitere Ausführungsformen der Sicherheitseinrichtung denkbar.

Vorteilhaft kann die Schaltungsanordnung ferner zumindest teilweise als integrierte Schaltung ausgebildet sein, wobei die integrierte Schaltung bei entsprechender Ausgestaltung der Komponenten die Logikeinheiten und/oder die Beschleunigungssensoren und/oder die Sicherheitseinrichtungen umfassen kann. Auch können für jeden Kanal separate integrierte Schaltungen vorgesehen sein.

Ein Verfahren zum Überwachen einer gefahrbringenden Einrichtung umfasst das Messen einer Beschleunigung wenigstens eines Teils der gefahrbringenden Einrichtung mittels wenigstens zwei Beschleunigungssensoren, wobei die Messwerte der wenigstens zwei Beschleunigungssensoren durch wenigstens eine logische Schaltung ausgewertet werden. Durch einen Ausgang der wenigstens einen logischen Schaltung wird wenigstens eine Sicherheitseinrichtung gesteuert, wobei die wenigstens eine logische Schaltung einen Schaltbefehl an die wenigstens eine Sicherheitseinrichtung sendet, wenn die gemessene Beschleunigung des wenigstens einen Teils der gefahrbringenden Einrichtung oder eine aus der gemessenen Beschleunigung abgeleitete Größe ein vorgegebenes Verhältnis zu einem gespeicherten Vergleichswert aufweist, und wobei die wenigstens eine Sicherheitseinrichtung in Antwort auf den empfangenen Schaltbefehl die gefahrbringende Einrichtung in einen sicheren Zustand zu überführt.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile. Es zeigen:
- Fig. 1: ein schematisches Blockschaltbild einer bevorzugten Ausführungsform einer erfindungsgemäßen Schaltungsanordnung,
- Fig. 2: schematisch eine erste bevorzugte Anordnung der in Fig. 1 dargestellten Komponenten,
- Fig. 3: schematisch eine zweite bevorzugte Anordnung der in Fig. 1 dargestellten Komponenten, und
- Fig. 4: schematisch eine dritte bevorzugte Anordnung der in Fig. 1 dargestellten Komponenten.

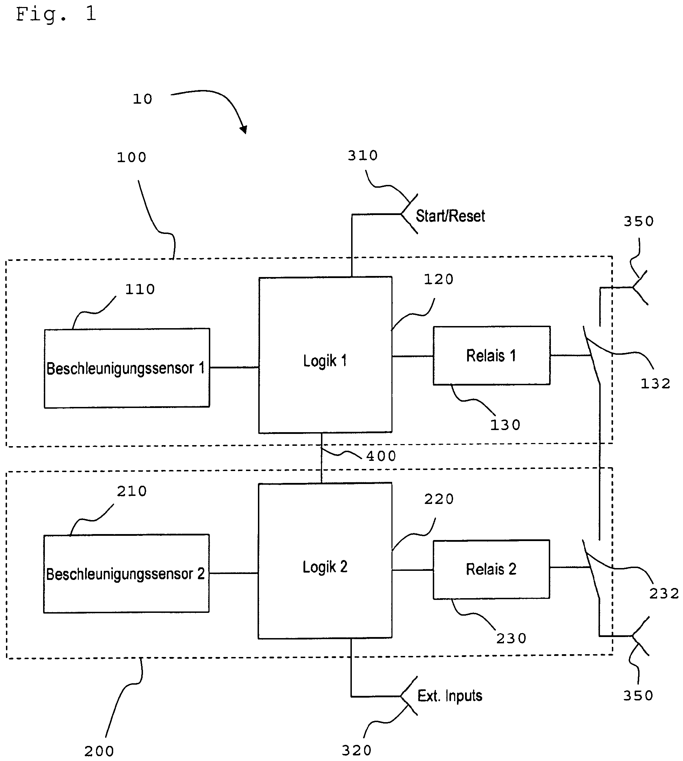

Fig. 1 zeigt ein schematisches Blockschaltbild einer bevorzugten Ausführungsform einer erfindungsgemäßen Schaltungsanordnung 10 zum Überwachen einer gefahrbringenden Einrichtung wie beispielsweise einer nicht dargestellten Maschine oder Anlage. In dem dargestellten Beispiel ist die gefahrbringende Einrichtung derart über die Anschlüsse 350 an die Stromversorgung angeschlossen, dass das Öffnen eines der Schalter 132 oder 232 zu einer Unterbrechung der Stromversorgung und damit zur Abschaltung der gefahrbringenden Einrichtung führt.

Die Schaltungsanordnung 10 ist zweikanalig ausgebildet mit einem ersten Kanal 100 und einem zweiten Kanal 200, wobei jeder der Kanäle 100 bzw. 200 einen Beschleunigungssensor 110 bzw. 210, eine Logikeinheit 120 bzw. 220, sowie ein Relais 130 bzw. 230 zum Schalten jeweils der eines der Schalter 132 bzw. 232 umfasst.

Die Beschleunigungssensoren 110 und 210 sind derart an der gefahrbringenden Einrichtung angeordnet, dass mit diesen die Beschleunigung wenigstens eines Teils der gefahrbringenden Einrichtung gemessen werden kann. Die von den Beschleunigungssensoren 110 bzw. 210 erzeugten Messwerte werden jeweils der mit dem jeweiligen Beschleunigungssensor verbundenen Logikeinheit 120 bzw. 220 zugeführt. Die Logikeinheiten 120 und 220 werten die empfangenen Messwerte aus und erzeugen einen Schaltbefehl, sofern die gemessene Beschleunigung oder eine daraus abgeleitete Größe außerhalb eines vorgegebenen Sollbereiches bzw. jenseits eines vorgegebene Grenzwertes liegt, wobei entsprechende Vergleichswerte in einem nicht dargestellten Speicher der Logikeinheiten hinterlegt sind. Wird ein solcher Schaltbefehl erzeugt, so wird dieser dem mit der jeweiligen Logikeinheit 120 bzw. 220 verbundenen Sicherheitsrelais 130 bzw. 230 zugeführt, woraufhin der Schalter 132 bzw. 232 geöffnet wird.

Zusätzlich kann durch Integration der Beschleunigungswerte auf die tatsächliche Geschwindigkeit oder Position rückgeschlossen werden. Aufgrund sich addierender Messfehler bei der Integration weist die Logikeinheit 120 im dargestellten Ausführungsbeispiel einen Eingang 310 auf, über den der Logikeinheit 120 signalisiert wird, eine aus der gemessenen Beschleunigung abgeleitete Geschwindigkeit und/oder Position auf einen definierten Wert zu initialisieren. Ferner weist die Logikeinheit 120 einen Eingang 320 für das Zuführen von Parametern, wie beispielsweise einem oder mehreren für die Auswertung zu verwendenden Vergleichswerten, auf. Die über die Eingänge 310 und 320 zugeführten Informationen werden im dargestellten Ausführungsbeispiel über die Verbindung 400 zwischen den Logikeinheiten 120 und 220 ausgetauscht. Ferner können über die Verbindung 400 auch Messwerte oder aus den Messwerten abgeleitete Größen, beispielsweise für eine Mittelwertbildung, ausgetauscht werden. Zur Überprüfung der eingesetzten Sensoren ist zudem vorteilhaft vorgesehen, die Messwerte oder aus den Messwerten abgeleitete Größen, die zwischen den Logikeinheiten 120 und 220 ausgetauscht werden, logisch auf Plausibilität zu prüfen. Zu diesem Zweck kann beispielsweise geprüft werden, ob die von den Logikeinheiten 120 und 220 bereitgestellten Messgrößen identisch sind. Abhängig von der Genauigkeit der Messgrößen kann alternativ auch geprüft werden, ob die Abweichung der Messgrößen voneinander einen vorgegebenen Wert überschreitet. Das Ergebnis der Plausibilitätsprüfung kann über einen nicht dargestellten Ausgang zur Weiterverarbeitung ausgegeben werden. So kann zum Beispiel über eine Benutzerschnittstelle angezeigt werden, dass die Messgrößen unterschiedlicher Sensoren voneinander abweichen, was auf eine Fehlfunktion hindeutet.

Alternativ zum Austausch der Eingangsdaten über die Verbindung 400 kann auch jede Logikeinheit jeweils einen eigenen Eingang für das Zuführen der Eingangsdaten aufweisen. Ferner kann unter Verwendung eines geeigneten Protokolls auch ein einzelner Eingang für unterschiedliche Eingangsdaten verwendet werden.

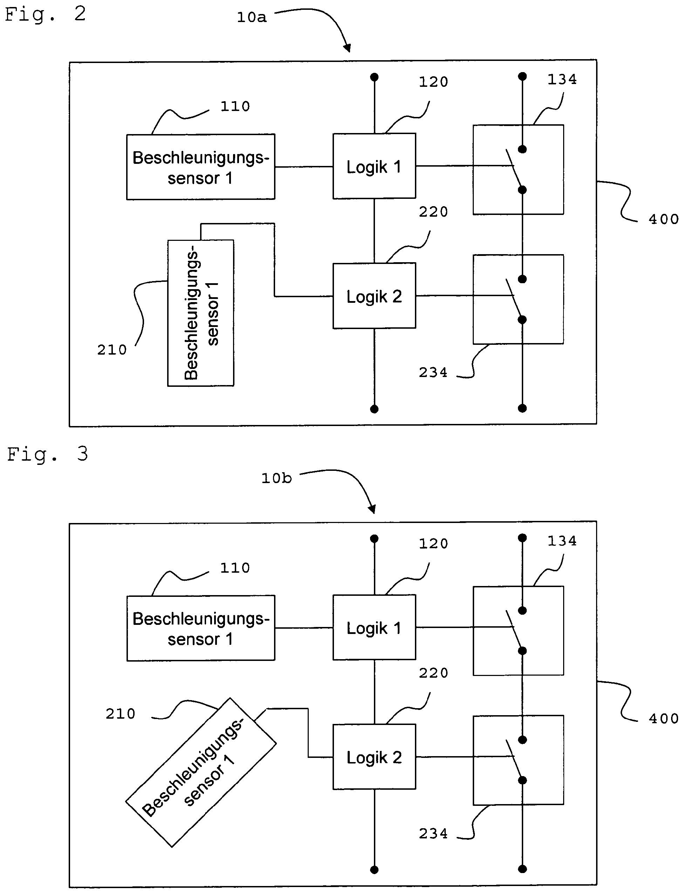

In den Figuren 2, 3 und 4 sind schematisch verschiedene bevorzugte Anordnungen der in Fig. 1 dargestellten Komponenten dargestellt.

Fig. 2 zeigt eine Schaltungsanordnung 10a, bei welcher die Beschleunigungssensoren 110 und 210 direkt mit den LogikEinheiten 120 und 220 und den sicheren Ausgängen 134 und 234, welche beispielsweise als Sicherheitsrelais oder Halbleiterschalter ausgebildet sein können, in einer Baugruppe, d.h. auf einer gemeinsamen Leiterplatte 400 angeordnet sind. Sichere Halbleiterausgänge sind insbesondere bei hohen Beschleunigungswerten vorteilhaft. Im dargestellten Ausführungsbeispiel sind die Beschleunigungssensoren 110 und 120 zur Vermeidung von Ausfällen aufgrund gemeinsamer Ursache in einer gemeinsamen Ebene, aber um 90° zueinander versetzt, d.h. um 90° gedreht, angeordnet.

Die in Fig. 3 dargestellte Schaltungsanordnung 10b entspricht der in Fig. 2 dargestellten mit dem einzigen Unterschied, dass die Beschleunigungssensoren 110 und 120 zur Vermeidung von Ausfällen aufgrund gemeinsamer Ursache um 45° zueinander versetzt angeordnet sind.

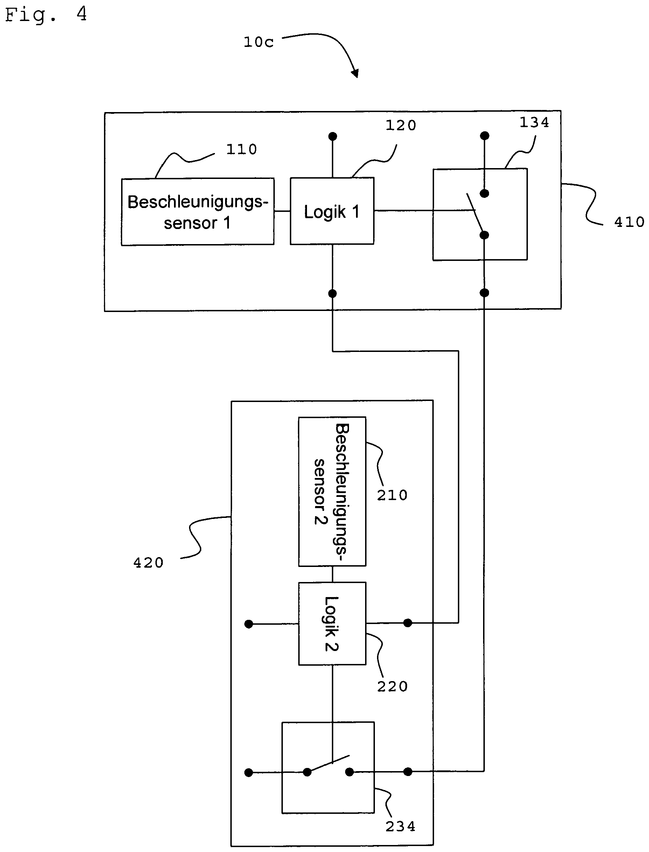

In Fig. 4 ist eine weitere alternative Schaltungsanordnung 10c dargestellt, bei welcher jeder der Beschleunigungssensoren 110 und 210 jeweils auf gleiche Weise auf einer separaten Leiterplatte 410 bzw. 420 angeordnet ist, wobei die Leiterplatten 410 und 420 um einen vorgegebenen Winkel, im dargestellten Beispiel um 90°, versetzt zueinander angeordnet sind.

Durch die Erfindung lassen sich Applikationen der Sicherheitstechnik, die sich mit gefährlichen Bewegungen beschäftigen, vorteilhaft auf einfache bzw. preisgünstige Weise bei gleichzeitiger Gewährleistung hoher Sicherheit realisieren.

## Patentansprüche

1. Schaltungsanordnung (10, 10a, 10b, 10c) zur Überwachung einer gefahrbringenden Einrichtung, umfassend
- wenigstens zwei Beschleunigungssensoren (110, 210) zum Messen einer Beschleunigung wenigstens eines Teils der gefahrbringenden Einrichtung, wobei die Beschleunigungssensoren (110, 210) zum Messen von Beschleunigungen in drei Raumrichtungen ausgebildet sind, und wobei die zwei Beschleunigungssensoren (110, 210) zur Vermeidung von Ausfällen aufgrund gemeinsamer Ursache um einen vorgegebenen Winkel versetzt zueinander angeordnet sind,
- wenigstens eine logische Schaltung (120, 220) zur Auswertung von Messwerten der wenigstens zwei Beschleunigungssensoren (110, 210),
- wenigstens einen Speicher zum Speichern eines Vergleichswertes, und
- wenigstens eine durch einen Ausgang der wenigstens einen logischen Schaltung (120, 220) gesteuerte Sicherheitseinrichtung (130, 132; 230, 232; 134; 234) die dazu ausgebildet ist, in Antwort auf ein über den Ausgang der wenigstens einen logischen Schaltung (120, 220) empfangenen Schaltbefehl die gefahrbringende Einrichtung in einen sicheren Zustand zu überführen, wobei die wenigstens eine logische Schaltung (120, 220) den Schaltbefehl an die wenigstens eine Sicherheitseinrichtung sendet (130, 132; 230, 232; 134; 234), wenn die gemessene Beschleunigung des wenigstens einen Teils der gefahrbringenden Einrichtung oder eine aus der gemessenen Beschleunigung abgeleitete Größe ein vorgegebenes Verhältnis zu dem gespeicherten Vergleichswert aufweist, wobei
die Schaltungsanordnung dazu ausgebildet ist, die Messwerte der wenigstens zwei Beschleunigungssensoren (110, 210) auf Plausibilität zu prüfen.

2. Schaltungsanordnung nach Anspruch 1, wobei jedem der Beschleunigungssensoren (110, 210) jeweils eine separate logische Schaltung (120, 220) zugeordnet ist.

3. Schaltungsanordnung nach Anspruch 2, wobei die separaten logischen Schaltungen (120, 220) miteinander verbunden und dazu ausgebildet sind, untereinander Daten auszutauschen.

4. Schaltungsanordnung nach einem der vorstehenden Ansprüche, wobei durch jede der wenigstens einen logischen Schaltung (120, 220) eine separate Sicherheitseinrichtung (130, 132; 230, 232; 134; 234) gesteuert wird.

5. Schaltungsanordnung nach einem der vorstehenden Ansprüche, wobei die wenigstens eine logische Schaltung (120, 220) dazu ausgebildet ist, aus den Messwerten der Beschleunigungssensoren (110, 210) die Geschwindigkeit und/oder die Position des wenigstens einen Teils der gefahrbringenden Einrichtung zu ermitteln.

6. Schaltungsanordnung nach einem der vorstehenden Ansprüche, wobei wenigstens eine der logischen Schaltung (120, 220) einen Eingang (310, 320) aufweist, um der logischen Schaltung (120, 220) einen Vergleichswert und/oder Initialisierungsdaten zum Initialisieren der ermittelten Geschwindigkeit und/oder Position des wenigstens einen Teils der gefahrbringenden Einrichtung zuzuführen.

7. Schaltungsanordnung nach einem der vorstehenden Ansprüche, wobei jeder der Beschleunigungssensoren (110, 210) jeweils auf gleiche Weise auf einer separaten Leiterplatte (410, 420) angeordnet ist, und wobei die Leiterplatten (410, 420) um einen vorgegebenen Winkel versetzt zueinander angeordnet sind.

8. Schaltungsanordnung nach einem der vorstehenden Ansprüche, wobei die wenigstens eine Sicherheitseinrichtung (130, 132; 230, 232; 134; 234) zur Unterbrechung der Stromversorgung der gefahrbringenden Einrichtung oder zur Aktivierung einer Bremseinrichtung ausgebildet ist.

9. Schaltungsanordnung nach einem der vorstehenden Ansprüche, wobei die wenigstens eine Sicherheitseinrichtung (130, 132; 230, 232; 134; 234) ein Relais (130, 230) oder einen Halbleiterschalter umfasst.

10. Schaltungsanordnung nach einem der vorstehenden Ansprüche, zumindest teilweise ausgebildet als integrierte Schaltung.

11. Verfahren zum Überwachen einer gefahrbringenden Einrichtung, umfassend die Schritte:
- Messen einer Beschleunigung wenigstens eines Teils der gefahrbringenden Einrichtung mittels wenigstens zwei Beschleunigungssensoren (110, 210), wobei die Beschleunigungssensoren (110, 210) zum Messen von Beschleunigungen in drei Raumrichtungen ausgebildet sind, und wobei die zwei Beschleunigungssensoren (110, 210) zur Vermeidung von Ausfällen aufgrund gemeinsamer Ursache um einen vorgegeben Winkel versetzt zueinander angeordnet sind,
- Speichern eines Vergleichswertes,
- Auswerten von Messwerten der wenigstens zwei Beschleunigungssensoren (110, 210) durch wenigstens eine logische Schaltung (120, 220), wobei die Messwerte der wenigstens zwei Beschleunigungssensoren (110, 210) auf Plausibilität geprüft werden,
- Steuern wenigstens einer Sicherheitseinrichtung (130, 132; 230, 232; 134; 234) durch einen Ausgang der wenigstens einen logischen Schaltung (120, 220), wobei die wenigstens eine logische Schaltung (120, 220) einen Schaltbefehl an die wenigstens eine Sicherheitseinrichtung (130, 132; 230, 232; 134; 234) sendet, wenn die gemessene Beschleunigung des wenigstens einen Teils der gefahrbringenden Einrichtung oder eine aus der gemessenen Beschleunigung abgeleitete Größe ein vorgegebenes Verhältnis zu dem gespeicherten Vergleichswert aufweist, und wobei die wenigstens eine Sicherheitseinrichtung (130, 132; 230, 232; 134; 234) in Antwort auf den empfangenen Schaltbefehl die gefahrbringende Einrichtung in einen sicheren Zustand überführt.

## Claims

1. A circuit arrangement (10, 10a, 10b, 10c) for monitoring a hazardous device comprising
- at least two acceleration sensors (110, 210) for measuring an acceleration of at least a part of the hazardous device, wherein the acceleration sensors (110, 210) are embodied to measure accelerations in three directions in space, and wherein the two acceleration sensors (110, 210) are arranged offset to one another by a predetermined angle to avoid common cause failures,
- at least one logic circuit (120, 220) for evaluating measured values of the at least two acceleration sensors (110, 210),
- at least one memory for storing a comparison value, and
- at least one safety device (130, 132; 230, 232; 134; 234) controlled by an output of the at least one logic circuit (120, 220), which is embodied in response to a switching command received via the output of the at least one logic circuit (120, 220), to convert the hazardous device to a safe state, wherein the at least one logic circuit (120, 220) transmits the switching command to the at least one safety device (130, 132; 230, 232; 134; 234) when the measured acceleration of the at least one part of the hazardous device or a value derived from the measured acceleration has a predetermined ratio to the stored comparison value, wherein the circuit arrangement is embodied to test the measured values of the at least two acceleration sensors (110, 210) for plausibility.

2. The circuit arrangement according to claim 1, wherein a separate logic circuit (120, 220) is respectively assigned to each of the acceleration sensors (110, 210).

3. The circuit arrangement according to claim 1, wherein the separate logic circuits (120, 220) are connected to one another and embodied to exchange data with one another.

4. The circuit arrangement according to one of the preceding claims, wherein a separate safety device (130, 132; 230, 232; 134; 234) is controlled by each of the at least one logic circuits (120, 220).

5. The circuit arrangement according to one of the preceding claims, wherein the at least one logic circuit (120, 220) is embodied to determine the speed and/or the position of the at least one part of the hazardous device from the measured values of the acceleration sensors (110, 210).

6. The circuit arrangement according to one of the preceding claims, wherein at least one of the logic circuits (120, 220) has an input (310, 320) in order to feed to the logic circuit (120, 220) a comparison value and/or initialization data for initializing the determined speed and/or position of the at least one part of the hazardous device.

7. The circuit arrangement according to one of the preceding claims, wherein each of the acceleration sensors (110, 210) is respectively arranged in the same manner on a separate circuit board (410, 420), and wherein the circuit boards (410, 420) are arranged offset to one another by a predetermined angle.

8. The circuit arrangement according to one of the preceding claims, wherein the at least one safety device (130, 132; 230, 232; 134; 234) is embodied to disconnect the power supply of the hazardous device or to activate a brake device.

9. The circuit arrangement according to one of the preceding claims, wherein the at least one safety device (130, 132; 230, 232; 134; 234) comprises a relay (130, 230) or a semiconductor switch.

10. The circuit arrangement according to one of the preceding claims, embodied at least in part as an integrated circuit.

11. A method for monitoring a hazardous device, comprising the steps:
- measurement of an acceleration of at least a part of the hazardous device by means of at least two acceleration sensors (110, 210), wherein the acceleration sensors (110, 210) are embodied to measure accelerations in three directions in space, and wherein the two acceleration sensors (110, 210) are arranged offset to one another by a predetermined angle to avoid common cause failures,
- storage of a comparison value,
- evaluation of measured values of the least two acceleration sensors (110, 210) by at least one logic circuit (120, 220), wherein the measured values of the at least two acceleration sensors (110, 210) are tested for plausibility,
- control of at least one safety device (130, 132; 230, 232; 134; 234) by an output of the at least one logic circuit (120, 220), wherein the at least one logic circuit (120, 220) transmits a switching command to the at least one safety device (130, 132; 230, 232; 134; 234) when the measured acceleration of the at least one part of the hazardous device or a value derived from the measured acceleration has a predetermined ratio to the stored comparison value, and wherein the at least one safety device (130, 132; 230, 232; 134; 234) in response to the received switching command converts the hazardous device into a safe state.

## Revendications

1. Agencement de circuit (10, 10a, 10b, 10c) destiné à surveiller un dispositif présentant un danger, comprenant
- au moins deux capteurs d'accélération (110, 210) pour mesurer une accélération d'au moins une pièce du dispositif présentant un danger, où les capteurs d'accélération (110, 210) pour mesurer des accélérations sont conçus dans trois directions spatiales, et où les deux capteurs d'accélération (110, 210) sont agencés en décalage l'un par rapport à l'autre selon un angle prédéfini pour éviter des défaillances du fait d'une cause commune,
- au moins un circuit logique (120, 220) pour exploiter des valeurs mesurées des au moins deux capteurs d'accélération (110, 210),
- au moins une mémoire pour mémoriser une valeur de comparaison, et
- au moins un dispositif de sécurité (130, 132 ; 230, 232 ; 134 ; 234) commandé par une sortie de l' au moins un circuit logique (120, 220) et qui est conçu pour amener le dispositif présentant un danger dans un état sûr en réponse à une instruction de commutation reçue via la sortie de l'au moins un circuit logique (120, 220), où l'au moins un circuit logique (120, 220) envoie l'instruction de commutation à l'au moins un dispositif de sécurité (130, 132 ; 230, 232 ; 134 ; 234) lorsque l'accélération mesurée de l'au moins une pièce du dispositif présentant un danger ou une grandeur dérivée de l'accélération mesurée présente un rapport prédéfini à la valeur de comparaison mémorisée,
où l'agencement de circuit est conçu pour vérifier quant à la plausibilité les valeurs mesurées des au moins deux capteurs d'accélération (110, 210).

2. Agencement de circuit selon la revendication 1, dans lequel un circuit logique (120, 220) séparé est respectivement attribué à chacun des capteurs d'accélération (110, 210) .

3. Agencement de circuit selon la revendication 2, dans lequel les circuits logiques (120, 220) séparés sont reliés les uns avec les autres et conçus pour échanger des données entre eux.

4. Agencement de circuit selon l'une des revendications précédentes, dans lequel un dispositif de sécurité (130, 132 ; 230, 232 ; 134 ; 234) séparé est commandé par chacun de l'au moins un circuit logique (120, 220).

5. Agencement de circuit selon l'une des revendications précédentes, dans lequel l'au moins un circuit logique (120, 220) est conçu pour déterminer, à partir des valeurs mesurées des capteurs d'accélération (110, 210), la vitesse et/ou la position de l'au moins une pièce du dispositif présentant un danger.

6. Agencement de circuit selon l'une des revendications précédentes, dans lequel au moins l'un du circuit logique (120, 220) présente une entrée (310, 320) pour acheminer jusqu'au circuit logique (120, 220) une valeur de comparaison et/ou des données d'initialisation pour initialiser la vitesse et/ou la position déterminées de l'au moins une pièce du dispositif présentant un danger.

7. Agencement de circuit selon l'une des revendications précédentes, dans lequel chacun des capteurs d'accélération (110, 210) est respectivement agencé de la même manière sur une carte imprimée (410, 420) séparée, et où les cartes imprimées (410, 420) sont agencées en décalage les unes par rapport aux autres selon un angle prédéfini.

8. Agencement de circuit selon l'une des revendications précédentes, dans lequel l'au moins un dispositif de sécurité (130, 132 ; 230, 232 ; 134 ; 234) est conçu pour interrompre l'alimentation en courant du dispositif présentant un danger ou pour activer un dispositif de freinage.

9. Agencement de circuit selon l'une des revendications précédentes, dans lequel l'au moins un dispositif de sécurité (130, 132 ; 230, 232 ; 134 ; 234) comprend un relais (130, 230) ou un circuit à semi-conducteur.

10. Agencement de circuit selon l'une des revendications précédentes, au moins partiellement conçu en tant que circuit intégré.

11. Procédé destiné à surveiller un dispositif présentant un danger, comprenant les étapes consistant à :
- mesurer une accélération d'au moins une pièce du dispositif présentant un danger au moyen d'au moins deux capteurs d'accélération (110, 210), où les capteurs d'accélération (110, 210) pour mesurer des accélérations sont conçus dans trois directions spatiales, et où les deux capteurs d'accélération (110, 210) sont agencés en décalage l'un par rapport à l'autre selon un angle prédéfini pour éviter des défaillances du fait d'une cause commune,
- mémoriser une valeur de comparaison,
- exploiter des valeurs mesurées des au moins deux capteurs d'accélération (110, 210) par au moins un circuit logique (120, 220), où les valeurs mesurées des au moins deux capteurs d'accélération (110, 210) sont vérifiées quant à la plausibilité,
- commander au moins un dispositif de sécurité (130, 132 ; 230, 232 ; 134 ; 234) par une sortie de l'au moins un circuit logique (120, 220), où l'au moins un circuit logique (120, 220) envoie une instruction de commutation à l'au moins un dispositif de sécurité (130, 132 ; 230, 232 ; 134 ; 234) lorsque l'accélération mesurée de l'au moins une pièce du dispositif présentant un danger ou une grandeur dérivée de l'accélération mesurée présente un rapport prédéfini à la valeur de comparaison mémorisée, et où l'au moins un dispositif de sécurité (130, 132 ; 230, 232 ; 134 ; 234) amène le dispositif présentant un danger dans un état sûr en réponse à l'instruction de commutation reçue.
